# EUROPÄISCHE PATENTSCHRIFT

(11) **EP 3 230 150 B1**
(45) Veröffentlichungstag und Bekanntmachung des Hinweises auf die Patenterteilung: **26.06.2019**
(21) Anmeldenummer: 15830972.4
(22) Anmeldetag: 02.12.2015
(51) Int. Cl.: B62B 3/14

(54) **FAHRBARE RAHMENEINHEIT**
MOBILE CHASSIS
CHÂSSIS MOBILE

(30) Priorität: 12.12.2014 DE 102014018540; 03.03.2015 DE 202015001639 U; 09.05.2015 DE 202015003470 U
(43) Veröffentlichungstag der Anmeldung: 18.10.2017
(73) Patentinhaber: Eberlein, Martin, 1113 Sofia (BG)
(72) Erfinder: Eberlein, Martin, 1113 Sofia (BG)
(86) Internationale Anmeldenummer: PCT/DE2015/000570
(87) Internationale Veröffentlichungsnummer: WO 2016/091242

(56) Entgegenhaltungen:
- DE-A1- 19 900 825
- DE-U1- 8 903 451
- FR-A1- 2 258 294
- US-A- 4 084 832

## Beschreibung

Die Erfindung betrifft eine fahrbare Rahmeneinheit für Einrichtungen wie Einkaufswagen, Transportwagen, Regale und dergleichen, gemäß des Oberbegriffs von Anspruch 1.

Das deutsche Geschmacksmuster DE 40004701.2, gemäß dem Oberbegriff von Anspruch 1, zeigt einen Längsträger für eine als Fahrgestell gestaltete Rahmeneinheit. Zwei dieser Längsträger sind Bestandteil des Fahrgestelles eines Einkaufswagens, der einen am Fahrgestell befestigten Korb sowie eine Schiebeeinrichtung aufweist. Bei solchen Einkaufswagen sind die beiden Längsträger, in Draufsicht betrachtet, in einem spitzen Winkel zur Vorderseite aufeinander zulaufend angeordnet, so dass der Abstand der freien Enden der Schlussabschnitte kleiner ist als der Abstand der freien Enden der Anfangsabschnitte. Jeder Längsträger beginnt von der Rückseite der Rahmeneinheit aus mit einem nach oben gerichteten Anfangsabschnitt, der eine hintere Fahrrolle trägt. Dem Anfangsabschnitt folgt ein von oben nach unten führender Stützabschnitt, an den sich ein zur Vorderseite gerichteter Zwischenabschnitt anschließt, dem schließlich ein Schlussabschnitt folgt, der eine vordere Fahrrolle trägt. Die beiden Längsträger sind durch eine hintere und durch eine vordere Strebenanordnung verbunden.

Die FR 2 258 294 A beschreibt einen mit einer Bremseinrichtung ausgestatteten, mit gleichen Wagen stapelbaren Gepäcktransportwagen, wie dieser in Bahnhöfen und/oder Flughäfen anzutreffen ist. Die zur Bildung dieses Transportwagens vorgesehene Rahmeneinheit weist zwei rückseitig angeordnete, nach oben gerichtete erste rohrförmige Träger auf, die einen schwenkbaren Schiebegriff tragen, der mit zwei Bremsstangen verbunden ist, die im Inneren der ersten Träger geführt, zum Einwirken auf zwei hintere, an den freien Enden der ersten Träger befindlichen Fahrrollen bestimmt sind. Auf etwa halber Höhe der beiden ersten Träger ist eine hintere Strebenanordnung vorgesehen, welche die beiden ersten Träger verbindet. Es sind ferner zwei zweite und zwei mittlere dritte Träger angeordnet, welche an der hinteren Strebenanordnung befestigt und mit einer vorderen Strebenanordnung verbunden sind. Die zweiten und die dritten Träger führen von der hinteren Strebenanordnung zuerst nach unten, dann ansteigend nach vorne, um dann wieder nach unten gerichtet an der vorderen Strebenanordnung zu enden. Die zweiten Träger streben in Schieberichtung des Gepäcktransportwagens spitzwinklig aufeinander zu, während die beiden dritten Träger in Schieberichtung spitzwinklig auseinander führen. Parallel zu den zweiten Trägern sind außerdem noch zwei vierte Träger vorgesehen, welche einen Teil der seitlichen Begrenzung des Gepäcktransportwagens bilden, so dass die zweiten und die dritten Träger zwischen den vierten Trägern angeordnet sind. Diese derart gestaltete Rahmeneinheit bildet einen Abstellbereich für Gepäck und dergleichen. Schließlich sind noch zwei fünfte, zuunterst platzierte Träger vorgesehen, welche, ebenfalls die beiden seitlichen Begrenzungen bildend, die beiden ersten rohrförmigen Träger mit der vorderen Strebenanordnung verbinden. Während zweifelsfrei erkennbar ist, dass die hinteren Fahrrollen an den freien Enden der beiden ersten rohrförmigen Träger angeordnet sind, ist weder aus der Beschreibung, noch aus der Zeichnung ersichtlich, wo genau die vorderen Fahrrollen befestigt sind.

Es ist Aufgabe der Erfindung, eine Rahmeneinheit der eingangs genannten Art so weiterzuentwickeln, dass diese sich beim Transport mit gleichen Rahmeneinheiten äußerst eng stapeln lässt, um damit das Frachtvolumen von mit der Rahmeneinheit ausgestatteten Einrichtungen wie Einkaufswagen, Transportwagen, fahrbaren Regalen usw. zu reduzieren und um damit Frachtkosten einzusparen.
Im Zuge einer Erweiterung der Erfindung soll es möglich sein, auf den Zwischenabschnitten Ware abstellen zu können.

Die Lösung der Aufgabe ist im kennzeichnenden Teil des Anspruches 1 beschrieben.

Die aufgefundene Lösung lässt Rahmeneinheiten entstehen, die in vorteilhafter Weise noch enger als bisher bekannt gestapelt werden können.

Bei einer bevorzugten Ausführungsform ist die vordere Strebenanordnung als ein mittig nach unten gebogenes Teil gestaltet, so dass ein tief gelegener Abschnitt gebildet ist, der beim Stapeln zweier Rahmeneinheiten die beiden Zwischenabschnitte und die beiden Stützabschnitte einer voraus befindlichen Rahmeneinheit unterfährt. Nur dann ist es möglich, gleiche Rahmeneinheiten platzsparend so eng zu stapeln, dass sich in einem für den Transport bestimmten Stapelverbund die hinteren Fahrrollen der Rahmeneinheiten einerseits und die vorderen Fahrrollen der Rahmeneinheiten andererseits fast berühren.

Die Erfindung wird anhand von Ausführungsbeispielen näher erläutert. Es zeigt
Fig. 1 eine Rahmeneinheit für eine als Einkaufswagen gestaltete fahrbare Einrichtung in Seitenansicht;
Fig. 2 die in Fig. 1 gezeigte Rahmeneinheit in Draufsicht;
Fig. 3 eine auf die Vorderseite der Rahmeneinheit gerichtete Ansicht in horizontaler Richtung;
Fig. 4 die in Fig. 3 beschriebene Rahmeneinheit in Draufsicht mit zusätzlichen Auflageteilen zum Vergrößern des Abstellbereiches;
Fig. 5 eine Rahmeneinheit für eine als Transportwagen gestaltete fahrbare Einrichtung in Seitenansicht;
Fig. 6 die Rahmeneinheit des in Fig. 5 beschriebenen Transportwagens in Draufsicht;
Fig. 7 den in den Fig. 5 und 6 beschriebenen Transportwagen in einer räumlichen Darstellung;
Fig. 8 in Seitenansicht eine Rahmeneinheit, die sich zur Bildung eines Regals oder eines Tisches eignet sowie
Fig. 9 die in Fig. 8 beschriebene Rahmeneinheit in Draufsicht.

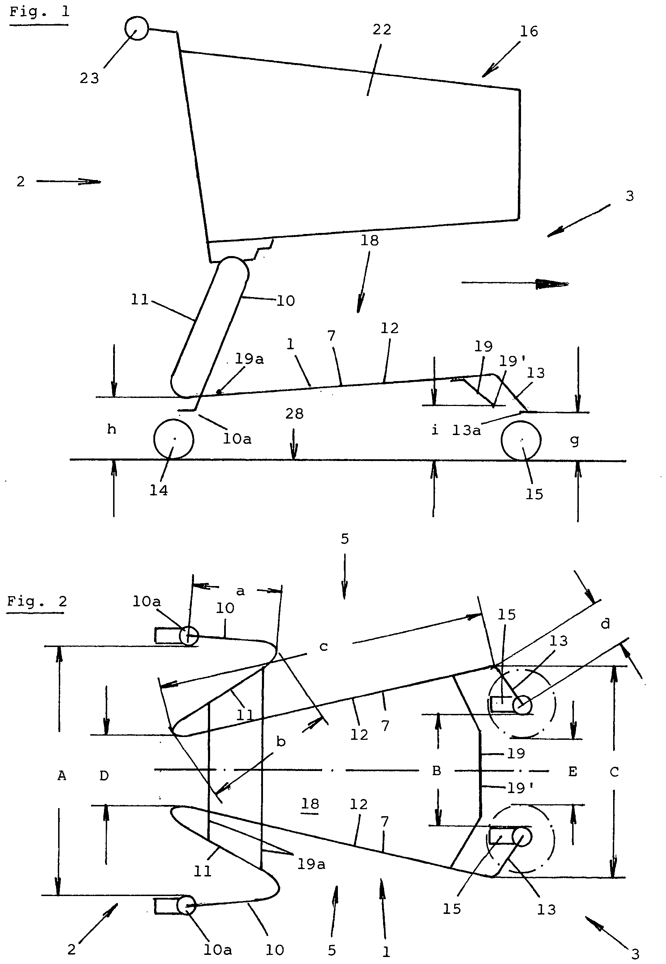

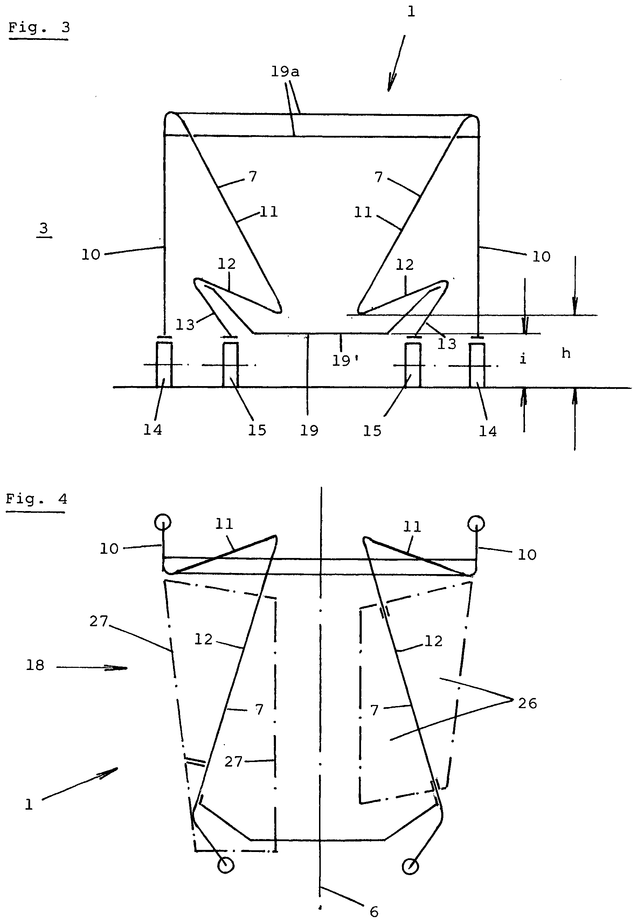

Fig. 1 zeigt eine für eine Einrichtung 16 bestimmte fahrbare Rahmeneinheit 1 in Seitenansicht. Die Einrichtung 16 ist im Beispiel als bekannter, handelsüblicher Einkaufswagen gestaltet. Die Einrichtung 16 weist eine Rahmeneinheit 1, einen von der Rahmeneinheit 1 getragenen und mit diesem ortsfest verbundenen Korb 22 sowie eine an der Rückseite 2 der fahrbaren Einrichtung 16 befindliche Schiebeeinrichtung 23 auf. Die fahrbare Rahmeneinheit ist in bekannter Weise so gestaltet, dass diese sich platzsparend mit einer weiteren gleichen fahrbaren Rahmeneinheit 1 ineinander schieben lässt. Die Rahmeneinheit 1 weist zwei auf Abstand gehaltene Längsträger 7 auf, welche zur Bildung der beiden Längsseiten 5 der Rahmeneinheit 1 beitragen, siehe auch Fig. 2. An den freien Enden 10a und 13a der Längsträger 7 sind je eine Fahrrolle 14 und 15 angeordnet. Die bevorzugt aus einem einzigen Rohstück oder aus zwei miteinander verschweißten Rohrstücken gebildeten Längsträger 7 sind so gestaltet und so angeordnet, dass die Spurweite der an der Vorderseite 3 der Rahmeneinheit 1 befindlichen vorderen Fahrrollen 15 kleiner ist als die Spurweite der an der Rückseite 2 der Rahmeneinheit 1 vorgesehenen hinteren Fahrrollen 14. Jeder bevorzugt aus Rundrohr gestaltete Längsträger 7 beginnt von der Rückseite 2 der Rahmeneinheit 1 aus mit einem Anfangsabschnitt 10, der von unten nach oben verläuft. An den Anfangsabschnitt 10 schließt ein Stützabschnitt 11 an, der von oben nach unten gerichtet ist. Dem Stützabschnitt 11 folgt ein in Schieberichtung (Pfeil) der Einrichtung 16 und damit der Rahmeneinheit 1 ansteigender Zwischenabschnitt 12, der an der Vorderseite 3 der Rahmeneinheit 1 in einen nach unten gerichteten Schlussabschnitt 13 mündet. Die Zwischenabschnitte 12 bilden einen Abstellbereich 18 zum Abstellen von Ware und Gegenständen, insbesondere für großvolumige Einkaufsgüter. Es sind eine vordere Strebenanordnung 19 und eine hintere Strebenanordnung 19a eingezeichnet, welche die beiden Längsträger 7 verbinden. Die vordere Strebenanordnung 19 weist einen zwischen den Längsträgern 7 gelegenen Abschnitt 19' auf, der gemessen von der Laufebene 28 der Fahrrollen 14, 15, tiefer angeordnet ist, siehe Maß i, als die unterste Begrenzung der Zwischenabschnitte 12 und/oder der sich anschließenden Stützabschnitte 11, siehe Maß h sowie Fig. 2 und Fig. 3. Die vordere Strebenanordnung 19 ist bevorzugt V-förmig oder U-förmig gestaltet. Mit dem Maß g ist der Abstand zwischen der Laufebene 28 und der unteren Begrenzung der beiden Schlussabschnitte 13 gekennzeichnet. Im Beispiel ist Maß g kleiner als das Maß h.

Fig. 2 zeigt die fahrbare Rahmeneinheit 1 der in Fig. 1 beschriebenen Einrichtung 16 in Draufsicht. Der Korb 22 sowie die Schiebeeinrichtung 23 sind nicht dargestellt. Die beiden Längsträger 7 der Rahmeneinheit 1 sind spiegelbildlich gestaltet und bilden die beiden Längsseiten 5 der Rahmeneinheit 1. Der Anfangsabschnitt 10 eines jeden Längsträgers 7 ist mit dem Maß a, der Stützabschnitt 11 mit dem Maß b, der Zwischenabschnitt 12 mit dem Maß c und der Schlussabschnitt 13 mit dem Maß d gekennzeichnet, vgl. auch Fig. 1. Die Maße a bis d sind nur ungefähr und sollen lediglich die Lage der einzelnen Abschnitte 10 bis 13 verdeutlichen. Es ist eine vordere Strebenanordnung 19 an der Vorderseite 3 und eine hintere Strebenanordnung 19a an der Rückseite 2 vorgesehen, welche die beiden Längsträger 7 verbinden. Es sind weitere Maße eingetragen. So ist mit dem Maß A der kleinste lichte Abstand der freien Enden 10a der Anfangsabschnitte 10 gekennzeichnet. Maß B verdeutlicht den kleinsten lichten Abstand der freien Enden 13a der Schlussabschnitte 13, der kleiner ist als der kleinste lichte Abstand der freien Abschnitte 10a. Maß C wiederum zeigt den größten außen gemessenen Abstand der Zwischenabschnitte 12, während Maß D den kleinsten außen gemessenen Abstand der Zwischenabschnitte 12 wiedergibt. Maß E zeigt den Abstand zwischen den Schwenkbereichen der beiden vorderen Fahrrollen 15, den, im Falle von Lenkrollen, die Räder der vorderen Fahrrollen 15 beim Schwenken beanspruchen. Die Schwenkbereiche sind als strichpunktiert gezeichnete Kreise dargestellt.

Maß B ist kleiner als Maß A.

Maß C ist kleiner als Maß A und größer als Maß B.

Maß D ist kleiner als Maß B, kleiner als Maß C und wahlweise kleiner als Maß E.

Die getroffene Wahl der Maße A bis E in Zusammenhang mit der besonderen Gestaltung der vorderen Strebenanordnung 19 lässt eine Rahmeneinheit 1 entstehen, die äußerst eng mit gleichen fahrbaren Rahmeneinheiten 1 gestapelt, also ineinander geschoben werden kann. Es ist möglich, Maß i, vgl. Fig. 1, dann äußerst klein zu halten, wenn das Maß D kleiner ist als das Maß E. Dann nämlich kann der durch die Zwischenabschnitte 12 gebildete Abstellbereich 18 äußerst tief gelegt werden, so dass im Falle einer Einrichtung 16 in Form eines Einkaufswagens der lichte Abstand zwischen der Oberseite der Zwischenabschnitte 12 und der Unterseite des Korbbodens, siehe Fig. 1, sehr groß gehalten werden kann, was z. B. ausreichend Höhe für die Unterbringung von hohen Getränkekisten auf dem Abstellbereich 18 schafft. In ineinander geschobenem Zustand zweier Rahmeneinheiten 1 sind die Anfangsabschnitte 10 und die Stützabschnitte 11 der beiden Rahmeneinheiten 1 hintereinander und die Zwischenabschnitte 12 der beiden Rahmeneinheiten 1 seitenversetzt angeordnet.

Fig. 3 zeigt die Rahmeneinheit 1 mit horizontalem Blick auf deren Vorderseite 3. Der Deutlichkeit wegen ist die Darstellung stark schematisch gehalten. Man erkennt die beiden Längsträger 7 zusammen mit den Anfangsabschnitten 10, den Stützabschnitten 11, den Zwischenabschnitten 12 und den Schlussabschnitten 13. In der Zeichnung sind die beiden Schlussabschnitte 13 durch die vordere Strebenanordnung 19 verbunden. Der Abschnitt 19' liegt tiefer, siehe Maß i, als die unterste Begrenzung der Zwischenabschnitte 12 und/oder der Stützabschnitte 11, vgl. Maß h. Je nach Gestaltung der Rahmeneinheit 1 kann aber auch die komplette vordere Strebenanordnung 19 tiefer angeordnet sein als die unterste Begrenzung der Zwischenabschnitte 12 und/oder der Stützabschnitte 11.

Anhand der Figuren 1 bis 3 ist ersichtlich, dass die Längsträger 7 als mehrfach gebogene Teile gestaltet sind. So weist jeder Längsträger 7 eine Biegung zwischen dem Anfangsabschnitt 10 und dem Stützabschnitt 11, eine Biegung zwischen dem Stützabschnitt 11 und dem Zwischenabschnitt 12 sowie wenigstens eine weitere Biegung zwischen dem Zwischenabschnitt 12 und dem Schlussabschnitt 13 auf. Auch der Anfangsabschnitt 10 kann bereits mit einer Biegung beginnen, wie in Fig. 1 bei Pos. 10a angedeutet. Sämtliche hier genannten Biegungen weisen bevorzugt einen gleichen Biegeradius auf.

Fig. 4 zeigt in einer Draufsicht die in Fig. 3 beschriebene Rahmeneinheit 1 mit zusätzlichen Elementen zur Vergrößerung des Abstellbereiches 18. Alternativ sind mindestens zwei Möglichkeiten dargestellt, wobei in der Zeichnung rechts zwei schwenkbar, also bewegbar angebrachte Auflageteile 26 und in der Zeichnung links, getrennt durch die Längsachse 6, ortsfest an der Rahmeneinheit 1 angebrachte Auflageteile 27 dargestellt sind. Die Auflageteile 26 und 27 sind zu beiden Seiten der Längsachse 6 der Rahmeneinheit 1 vorgesehen. Da die Auflageteile 26, 27 unterschiedlich gestaltet werden können, sind diese hier nur schematisch dargestellt. Die rechts dargestellten Auflageteile 26 sind schwenkbar an den Zwischenabschnitten 12 angelenkt. Beim Stapelvorgang zweier Rahmeneinheiten 1 werden die schwenkbaren Auflageteile 26 von einer einzuschiebenden Rahmeneinheit 1 nach oben geschwenkt. Beim Lösen der Rahmeneinheiten 1 kehren die Auflageteile 26 wieder zurück in ihre durch Anschläge gesicherte Gebrauchslage, wie gezeichnet.

Die ortsfest angebrachten Auflageteile 27 sind in der Zeichnung an den Zwischenabschnitten 12 befestigt. Sie können auch, je nach Gestaltung, entweder an den Zwischenabschnitten 12 und an den Stützabschnitten 11 oder an den Zwischenabschnitten 12 und an den Anfangsabschnitten 10 befestigt sein. Dies gilt auch dann, wenn rechts und links der Längsachse 6 nur jeweils ein ortsfestes Auflageteil 27 vorgesehen ist. Sowohl die schwenkbaren als auch die ortsfesten Auflageteile 26, 27 können sowohl zwischen den Zwischenabschnitten 12 als auch seitlich neben den Zwischenabschnitten 12 die dort befindlichen Räume ausfüllen. Bei einer Fertigung der Längsträger 7 und der Auflageteile 27 erweist es sich als besonders vorteilhaft, die Längsträger 7 und die Auflageteile 27 aus Rundrohr zu fertigen und dabei den Rohrdurchmesser für die Längsträger 7 aus Stabilitätsgründen größer zu wählen als den Rohrdurchmesser für die Auflageteile 27. Durch diese Maßnahme ist es möglich, mehrere gleiche Rahmeneinheiten 1 äußerst eng, und damit platzsparend, in einer Reihe abstellen, also stapeln zu können. Was die Längsträger 7 betrifft, so ist ein enges Stapeln durch die vorgeschlagene Gestaltung, wie in den Figuren 1 bis 3 beschrieben, bereits verwirklicht. Da gestapelte gleiche Rahmeneinheiten 1 immer einen gleichen Stapelabstand von einer Rahmeneinheit 1 zur nächsten einnehmen, lässt sich der gewählte Stapelabstand auch dann einhalten, wenn, wie bereits vorgeschlagen, der Rohrdurchmesser für die Auflageteile 27 geringer ist als der Rohrdurchmesser für die Längsträger 7. In gestapeltem Zustand mehrerer gleicher Rahmeneinheiten 1 nehmen dann die Auflageteile 27 der einzelnen Rahmeneinheiten 1 eine zueinander versetzt geschichtete Lage ein, während die Längsträger 7 der einzelnen Rahmeneinheiten 1 durch die besondere Gestaltung sich teilweise überschneidend angeordnet sind. Durch die geschichtete Lage der Auflageteile 27 lässt sich die Form der Auflageteile 27 sehr variabel gestalten. So ist es möglich, die Form der Auflageteile 27 so zu wählen, dass, in Draufsicht betrachtet, der durch die Zwischenabschnitte 12 und durch die Auflageteile 27 gebildete Abstellbereich 18 eine nahezu quadratische oder rechteckige Form aufweist, was eine vorteilhafte Vergrößerung des Abstellbereiches 18 bedeutet.

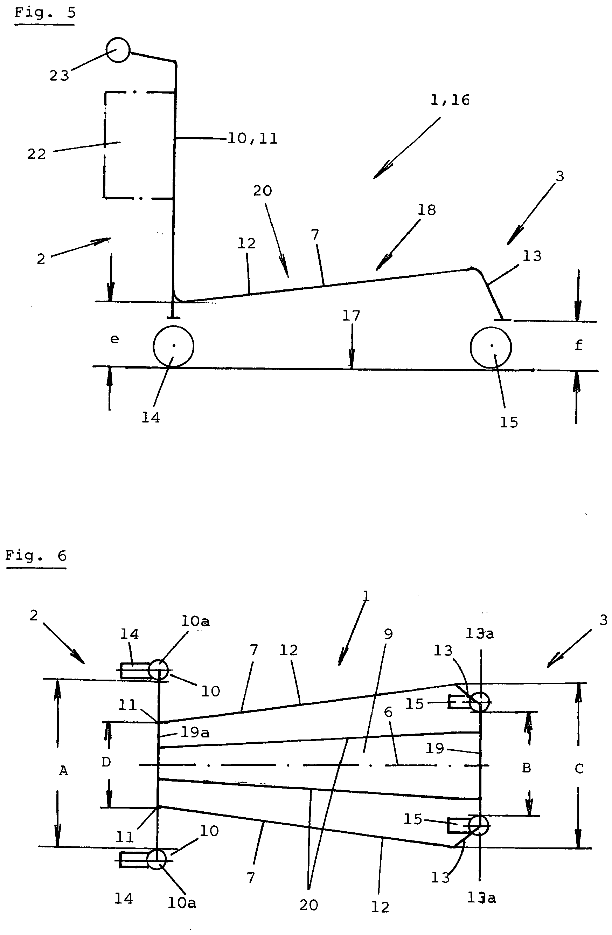

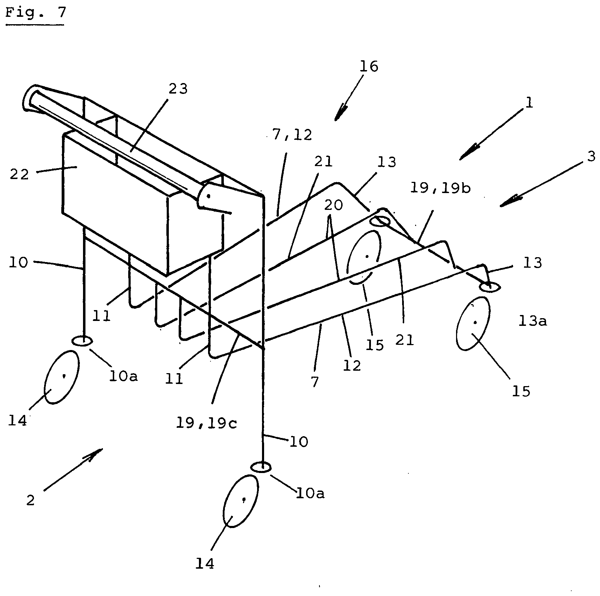

In Seitenansicht betrachtet zeigt Fig. 5 eine als von Hand bewegbarer Transportwagen gestaltete fahrbare Einrichtung 16, die beispielsweise zum Transport großvolumiger Güter oder von Gepäck geeignet ist. Bei solchen Einrichtungen 16 wird Wert auf einen großen, durch die Längsträger 7 gebildeten Abstellbereich 18 zum Abstellen von Gegenständen gelegt, während der Korb 22, sofern vorhanden, üblicherweise relativ klein gestaltet ist. In der Zeichnung von links beginnend erkennt man die Schiebeeinrichtung 23 sowie von den beiden Längsträgern 7 deren Anfangsabschnitt 10, von diesem verdeckt deren Stützabschnitt 11, diesem folgend deren in Schieberichtung ansteigenden Zwischenabschnitt 12 sowie deren Schlussabschnitt 13. An den Anfangsabschnitten 10 befinden sich die hinteren Fahrrollen 14, während die vorderen Fahrrollen 15 an den Schlussabschnitten 13 angeordnet sind. Der von der Laufebene 17 der Fahrrollen 14, 15 zur unteren Begrenzung der Stützabschnitte 11 gemessene Abstand e ist größer als die von der Laufebene 17 zur unteren Begrenzung der Schlussabschnitte 13 und der Auflageeinrichtung 20 gemessene Abstand f. Diese maßliche Bedingung muß erfüllt sein, um solche mit einer Rahmeneinheit 1 ausgestatteten Transportwagen in einen gleichen Transportwagen einschieben zu können, siehe auch Fig. 7.

Fig. 6 zeigt in einer Draufsicht die in Fig. 5 beschriebene Rahmeneinheit 1. Maß A steht für die lichte Weite der freien Enden 10a der Anfangsabschnitte 10. Die lichte Weite der freien Enden 13a der Schlussabschnitte 13 ist durch das Maß B festgelegt. Maß C kennzeichnet den größten außen gemessenen Abstand der Zwischenabschnitte 12, während der kleinste außen gemessene Abstand der Zwischenabschnitte 12 durch das Maß D festgelegt ist. Es gilt wieder, dass das Maß B kleiner ist als das Maß A und dass Maß D wiederum kleiner ist als Maß C. Abstand C befindet sich an der Vorderseite 3 und Abstand D an der Rückseite 2 der Rahmeneinheit 1. Durch die beiden Längsträger 7 ist ein Zwischenraum 9 gebildet, in dem sich eine weitere Auflageeinrichtung 20 befindet.

In einer räumlichen Darstellung zeigt Fig. 7 die in Fig. 5 und teilweise in Fig. 6 beschriebene, als Transportwagen gestaltete fahrbare Einrichtung 16. An der Rückseite 2 der Rahmeneinheit 1 sind die beiden Anfangsabschnitte 10 der beiden Längsträger 7 nach oben gerichtet und gehen waagrecht in die Stützabschnitte 11 über, die wiederum senkrecht oder schräg nach unten gerichtet sind. Den Stützabschnitten 11 folgen die in Schieberichtung ansteigenden Zwischenabschnitte 12, die in Schieberichtung winklig auseinander führen. An der Vorderseite 3 der Rahmeneinheit 1 gehen die Zwischenabschnitte 12 in die nach unten gerichteten Schlussabschnitte 13 über. Zur Strebenanordnung 19, welche die beiden Längsträger 7 verbindet, gehören ein vorderer erster Querstab 19b, der an der Vorderseite 3 der Rahmeneinheit 1 angeordnet ist und wenigstens ein zweiter Querstab 19c, der sich an der Rückseite 2 der Rahmeneinheit 1 befindet. In Anlehnung an die Formgebung der beiden Längsträger 7 ist die Auflageeinrichtung 20 zwischen den beiden Längsträgern 7 angeordnet. Die Stäbe 21 der Auflageeinrichtung 20 sind am ersten und am zweiten Querstab 19b, 19c befestigt. An dieser Stelle sei an die Maße e und f erinnert, die in Fig. 5 eingezeichnet sind. Am hinteren oberen Bereich der beiden Längsträger 7 ist rückseitig ein Korb 22 vorgesehen, der die zwischen den beiden Stützabschnitten 11 befindliche Lücke überbrückt. Ebenfalls am oberen Bereich der Längsträger 7 angeordnet befindet sich rückseitig die Schiebeeinrichtung 23.

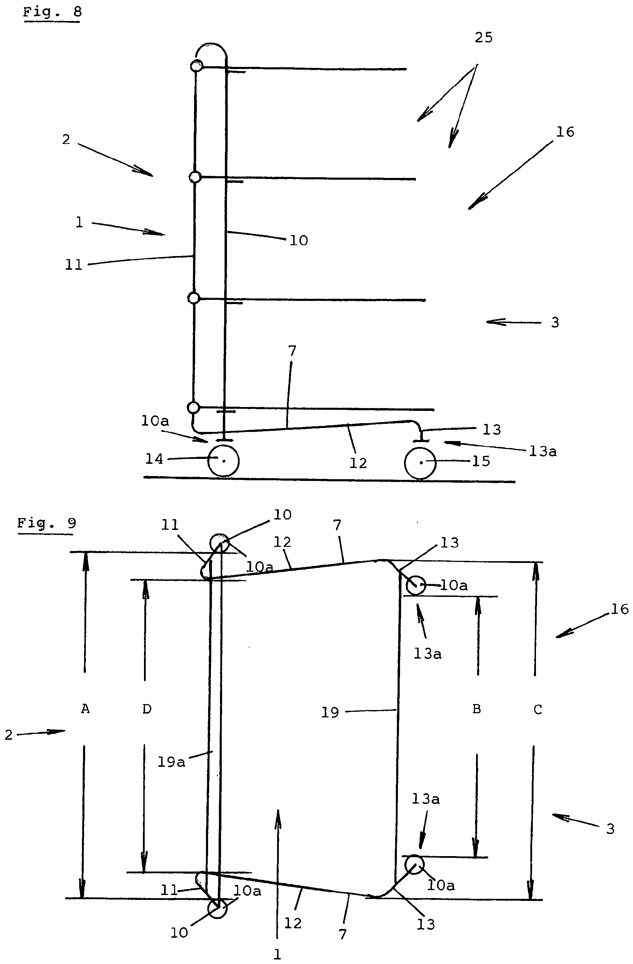

Fig. 8 zeigt eine als Regal ausgebildete, mit einer fahrbaren Rahmeneinheit 1 ausgestattete Einrichtung 16 in Seitenansicht. Die Formgebung der beiden Längsträger lehnt sich an die in den Figuren 1 bis 7 aufgezeigten Formgebungen an, jedoch mit dem Unterschied, dass der Anfangsabschnitt 10 und die Stützabschnitte 11 in etwa mannshoch gestaltet sind, um ein Regal zu bilden. Die Zwischenabschnitte 12 und die Schlussabschnitte 13 sind so gestaltet, wie vorab beschrieben. An den Stützabschnitten 11 sind Fächer 25 angeordnet, die unterschiedlich gestaltbar sind und die sich entweder an den Stützabschnitten 11 einhängen lassen oder an den Stützabschnitten 11 so gelagert sind, dass sich die Fächer 25 aus einer Gebrauchslage, wie gezeichnet, in eine Nichtgebrauchslage überführen lassen, in der sie wenig Raum beanspruchen. Wählt man eine geringere Höhe für die Anfangsabschnitte 10 und für die Stützabschnitte 11 und verwendet man ein relativ großes Fach 25, so kann die solchermaßen gestaltete Einrichtung 16 auch als feststehender und/oder als fahrbarer Verkaufstisch in SB-Märkten Verwendung finden.

Ergänzend zeigt Fig. 9 in einer Draufsicht die Rahmeneinheit 1 der in Fig. 8 beschriebenen Einrichtung 16. Die geometrische und räumliche Anordnung der Anfangsabschnitte 10, der Stützabschnitte 11, der Zwischenabschnitte 12 und der Schlussabschnitte 13 lässt sich den Beschreibungen gemäß der Figuren 1 bis 8 entnehmen. Die Maße A, B, C und D entsprechen ebenfalls jenen, wie zuvor beschrieben. Gleiches gilt auch für die lichten Weiten der freien Enden 10a der Anfangsabschnitte 10 und der freien Enden 13a der Schlussabschnitte 13.

## Patentansprüche

1. Fahrbare Rahmeneinheit (1) für Einrichtungen (16) wie Einkaufswagen, Transportwagen, Regale und dergleichen, wobei die Rahmeneinheit (1) platzsparend in eine weitere gleiche Rahmeneinheit (1) eingeschoben werden kann und zwei auf Abstand gehaltene Längsträger (7) aufweist, die von der Rückseite (2) der Rahmeneinheit (1) zu deren Vorderseite (3) geführt sind und die jeweils einen von der Rückseite (2) aus beginnenden, von unten nach oben gerichteten Anfangsabschnitt (10) aufweisen, an den sich ein von oben nach unten führender Stützabschnitt (11) anschließt, dem ein zur Vorderseite (3) der Rahmeneinheit (1) gerichteter, in Schieberichtung der Rahmeneinheit (1) ansteigender Zwischenabschnitt (12) folgt, der in einen an der Vorderseite (3) endenden Schlussabschnitt (13) mündet, wobei am freien Ende (10a) der Anfangsabschnitte (10) je eine hintere Fahrrolle (14) und am freien Ende (13a) der Schlussabschnitte (13) je eine vordere Fahrrolle (15) angeordnet sind, wobei ferner die Abstände der freien Enden (13a) der Schlussabschnitte (13) und der freien Enden (10a) der Anfangsabschnitte (10) so gewählt sind, dass die Spurweite der vorderen Fahrrollen (15) kleiner ist als die Spurweite der hinteren Fahrrollen (14) und dass die Längsträger (7) durch eine vordere und durch eine hintere Strebenanordnung (19, 19a) verbunden sind, **dadurch gekennzeichnet, dass** die Zwischenabschnitte (12) der beiden Längsträger (7), beginnend von den Stützabschnitten (11), zur Vorderseite (3) der Rahmeneinheit (1) hin winklig auseinanderstrebend angeordnet sind, dass die größte zwischen den Zwischenabschnitten (12) außen gemessene Breite (C) kleiner ist als der kleinste lichte Abstand (A) der freien Enden (10a) der Anfangsabschnitte (10), dass die kleinste zwischen den Zwischenabschnitten (12) außen gemessene Breite (D) kleiner ist als der kleinste lichte Abstand (B) zwischen den freien Enden (13a) der Schlussabschnitte (13), dass in Draufsicht betrachtet zu beiden Seiten der Längsachse (6) der Rahmeneinheit (1) bewegbare Auflageteile (26) oder ortsfeste Auflageteile (27) vorgesehen sind, und dass die vordere Strebenanordnung (19) entweder komplett oder mit einem zwischen den Längsträgern (7) gelegenen Abschnitt (19'), gemessen von der Laufebene (28) der Rahmeneinheit (1), tiefer angeordnet ist als die unterste Begrenzung der Zwischenabschnitte (12) und/oder der sich anschließenden Stützabschnitte (11).

2. Fahrbare Rahmeneinheit nach Anspruch 1, **dadurch gekennzeichnet, dass** der Abstand (g) zwischen der Laufebene (28) der Fahrrollen (14, 15) und der unteren Begrenzung der beiden Schlussabschnitte (13) kleiner ist als der zwischen der Laufebene (28) und der untersten Begrenzung der Zwischenabschnitte (12) und/oder der Stützabschnitte (11) gemessene Abstand (h).

3. Fahrbare Rahmeneinheit nach Anspruch 1, **dadurch gekennzeichnet, dass** die kleinste zwischen den Zwischenabschnitten (12) außen gemessene Breite (D) kleiner ist als der zwischen den Schwenkbereichen der vorderen Fahrrollen (15) gemessene Abstand (E).

4. Fahrbare Rahmeneinheit nach Anspruch 1, **dadurch gekennzeichnet, dass** die vordere Strebenanordnung (19) V-förmig oder U-förmig gestaltet ist.

5. Fahrbare Rahmeneinheit nach Anspruch 1, **dadurch gekennzeichnet, dass** die ortsfesten Auflageteile (27) entweder an den Zwischenabschnitten (12) und an den Stützabschnitten (11) oder an den Zwischenabschnitten (12) und an den Anfangsabschnitten (10) befestigt sind.

6. Fahrbare Rahmeneinheit nach Anspruch 1, **dadurch gekennzeichnet, dass** die Längsträger (7) und die ortsfesten Auflageteile (27) aus Rundrohr gestaltet sind und dass der Rohrdurchmesser der Längsträger (7) größer ist als der Rohrdurchmesser der Auflageteile (27).

7. Fahrbare Rahmeneinheit nach Anspruch 1, **dadurch gekennzeichnet, dass** sämtliche an den Längsträgern (7) vorgesehenen Biegungen einen gleichen Biegeradius aufweisen.

8. Fahrbare Rahmeneinheit nach Anspruch 1, **dadurch gekennzeichnet, dass** die Stützabschnitte (11) entweder zur Rückseite (2) der Rahmeneinheit (1) gerichtet oder senkrecht angeordnet sind.

9. Fahrbare Rahmeneinheit nach Anspruch 1, **dadurch gekennzeichnet, dass** in einem durch die beiden Längsträger (7) gebildeten Zwischenraum (9) eine ein- oder mehrteilige Auflageeinrichtung (20) vorgesehen ist.

10. Fahrbare Rahmeneinheit nach Anspruch 9, **dadurch gekennzeichnet, dass** rechts und links der Längsträger (7) je ein weiterer Teil einer Auflageeinrichtung (20) vorgesehen ist.

11. Fahrbare Rahmeneinheit nach Anspruch 9 oder 10, **dadurch gekennzeichnet, dass** die Teile der Auflageeinrichtung (20) aus einer Gebrauchslage heraus nach oben ausweichbar an den Auflageabschnitten (12) gelagert sind.

12. Fahrbare Rahmeneinheit nach Anspruch 9, **dadurch gekennzeichnet, dass** die Auflageeinrichtung (20) an einem vorderen Querstab (19b) und an einem weiteren Querstab (19c) befestigt ist, wobei die Querstäbe (19b, 19c) der Strebenanordnungen (19, 19a) angehören.

13. Fahrbare Rahmeneinheit nach Anspruch 1, **dadurch gekennzeichnet, dass** beim Ineinanderschiebevorgang zweier Rahmeneinheiten (1) die Schlussabschnitte (13) der einzuschiebenden Rahmeneinheit (1) die Auflageabschnitte (12) der vorausbefindlichen Rahmeneinheit (1) unterfahren.

14. Fahrbare Rahmeneinheit nach Anspruch 1, **dadurch gekennzeichnet, dass** in ineinander geschobenem Zustand zweier Rahmeneinheiten (1) die Anfangsabschnitte (10) und die Stützabschnitte (11) der beiden Rahmeneinheiten (1) hintereinander und die Zwischenabschnitte (12) der beiden Rahmeneinheiten (1) seitenversetzt angeordnet sind.

## Claims

1. Mobile frame unit (1) for devices (16) such as shopping trolleys, transport carts, racks and the like, wherein the frame unit (1) can be pushed in a space-saving manner into a further, identical frame unit (1) and has two spaced-apart longitudinal members (7), which are guided from the rear side (2) of the frame unit (1) to the front side (3) of the latter and each have an initial portion (10) which begins from the rear side (2), is directed from the bottom up and is adjoined by a supporting portion (11) which leads from the top down and is followed by an intermediate portion (12) which is directed towards the front side (3) of the frame unit (1), slopes upwards in the pushing direction of the frame unit (1) and opens out into a terminating portion (13) which ends on the front side (3), wherein a respective rear castor (14) is arranged at the free end (10a) of the initial portions (10) and a respective front castor (15) is arranged at the free end (13a) of the terminating portions (13), wherein it is also the case that the distances between the free ends (13a) of the terminating portions (13) and the free ends (10a) of the initial portions (10) are selected such that the track width of the front castors (15) is smaller than the track width of the rear castors (14), and the longitudinal members (7) are connected by a front and by a rear strut arrangement (19, 19a), **characterized in that**, starting from the supporting portions (11) and going in the direction of the front side (3) of the frame unit (1), the intermediate portions (12) of the two longitudinal members (7) are arranged so as to diverge from one another at an angle, **in that** the largest width (C) measured on the outside between the intermediate portions (12) is smaller than the smallest clear distance (A) between the free ends (10a) of the initial portions (10), **in that** the smallest width (D) measured on the outside between the intermediate portions (12) is smaller than the smallest clear distance (B) between the free ends (13a) of the terminating portions (13), **in that** movable bearing parts (26) or fixed bearing parts (27) are provided on either side of the longitudinal axis (6) of the frame unit (1), as seen in plan view, and **in that** the front strut arrangement (19), either in its entirety or by way of a portion (19') located between the longitudinal members (7), is arranged at a lower level, as measured from the running plane (28) of the frame unit (1), than the lowermost boundary of the intermediate portions (12) and/or of the adjoining supporting portions (11) .

2. Mobile frame unit according to Claim 1, **characterized in that** the distance (g) between the running plane (28) of the castors (14, 15) and the lower boundary of the two terminating portions (13) is smaller than the distance (h) measured between the running plane (28) and the lowermost boundary of the intermediate portions (12) and/or of the supporting portions (11).

3. Mobile frame unit according to Claim 1, **characterized in that** the smallest width (D) measured on the outside between the intermediate portions (12) is smaller than the distance (E) measured between the pivoting regions of the front castors (15).

4. Mobile frame unit according to Claim 1, **characterized in that** the front strut arrangement (19) is of V-shaped or U-shaped configuration.

5. Mobile frame unit according to Claim 1, **characterized in that** the fixed bearing parts (27) are fastened either on the intermediate portions (12) and on the supporting portions (11) or on the intermediate portions (12) and on the initial portions (10).

6. Mobile frame unit according to Claim 1, **characterized in that** the longitudinal members (7) and the fixed bearing parts (27) are formed from round tube material, and **in that** the tube diameter of the longitudinal members (7) is greater than the tube diameter of the bearing parts (27).

7. Mobile frame unit according to Claim 1, **characterized in that** all the bends provided on the longitudinal members (7) have the same bending radius.

8. Mobile frame unit according to Claim 1, **characterized in that** the supporting portions (11) either are directed towards the rear side (2) of the frame unit (1) or are arranged vertically.

9. Mobile frame unit according to Claim 1, **characterized in that** a bearing device (20) in one or more parts is provided in an interspace (9) formed by the two longitudinal members (7).

10. Mobile frame unit according to Claim 9, **characterized in that** a further part of a bearing device (20) is provided in each case to the right and left of the longitudinal members (7).

11. Mobile frame unit according to Claim 9 or 10, **characterized in that** the parts of the bearing device (20) are mounted on the bearing portions (12) such that they can yield upwards out of a use position.

12. Mobile frame unit according to Claim 9, **characterized in that** the bearing device (20) is fastened on a front crossbar (19b) and on a further crossbar (19c), wherein the crossbars (19b, 19c) belong to the strut arrangements (19, 19a) .

13. Mobile frame unit according to Claim 1, **characterized in that**, when two frame units (1) are pushed one inside the other, the terminating portions (13) of the frame unit (1) which is to be pushed in move beneath the bearing portions (12) of the frame unit (1) in front.

14. Mobile frame unit according to Claim 1, **characterized in that**, when two frame units (1) have been pushed one inside the other, the initial portions (10) and the supporting portions (11) of the two frame units (1) are arranged one behind the other and the intermediate portions (12) of the two frame units (1) are arranged in a laterally offset manner.

## Revendications

1. Unité de cadre mobile (1) pour dispositifs (16) tels que des chariots de supermarché, des chariots de transport, des rayonnages et similaires, l'unité de cadre (1) pouvant être insérée de manière compacte dans une autre unité de cadre identique (1) et comprenant deux longerons (7) maintenus à distance qui sont guidés à partir du côté arrière (2) de l'unité de cadre (1) jusqu'au côté avant (3) et qui comprennent respectivement une partie initiale (10) partant du côté arrière (2) et orientée du bas vers le haut, partie initiale à laquelle se raccorde une partie de support (11) menant du haut vers le bas, laquelle est suivie par une partie intermédiaire (12) orientée vers le côté avant (3) de l'unité de cadre (1) et montant dans la direction de poussée de l'unité de cadre (1), laquelle partie intermédiaire débouche dans une partie terminale (13) se terminant au niveau du côté avant (3), une roulette arrière (14) étant disposée respectivement à l'extrémité libre (10a) des parties initiales (10) et une roulette avant (15) étant disposée respectivement à l'extrémité libre (13a) des parties terminales (13), l'écart entre les extrémités libres (13a) des parties terminales (13) et l'écart entre les extrémités libres (10a) des parties initiales (10) étant sélectionnés de telle sorte que l'écartement des roulettes avant (15) est inférieur à l'écartement des roulettes arrière (14) et de telle sorte que les longerons (7) sont reliés par un ensemble entretoise avant et un ensemble entretoise arrière (19, 19a), **caractérisée en ce que** les parties intermédiaires (12) des deux longerons (7) sont disposées de manière à s'écarter l'une de l'autre de façon angulaire à partir des parties de support (11), en direction du côté avant (3) de l'unité de cadre (1), **en ce que** la largeur (C) la plus grande mesurée à l'extérieur entre les parties intermédiaires (12) est inférieure au plus petit écart intérieur (A) entre les extrémités libres (10a) des parties initiales (10), **en ce que** la largeur (D) la plus petite mesurée à l'extérieur entre les parties intermédiaires (12) est inférieure au plus petit écart intérieur (B) entre les extrémités libres (13a) des parties terminales (13), **en ce que** des parties d'appui mobiles (26) ou des parties d'appui fixes (27) sont prévues des deux côtés de l'axe longitudinal (6) de l'unité de cadre (1), considéré en vue de dessus, et **en ce que** l'ensemble entretoise avant (19) est, soit complètement soit par une partie (19') située entre les longerons (7), disposé plus bas, mesuré à partir du plan de roulement (28) de l'unité de cadre (1), que la limite la plus basse des parties intermédiaires (12) et/ou des parties de support (11) adjacentes.

2. Unité de cadre mobile selon la revendication 1, **caractérisée en ce que** l'écart (g) entre le plan de roulement (28) des roulettes (14, 15) et la limite inférieure des deux parties terminales (13) est inférieur à l'écart (h) mesuré entre le plan de roulement (28) et la limite la plus basse des parties intermédiaires (12) et/ou des parties de support (11).

3. Unité de cadre mobile selon la revendication 1, **caractérisée en ce que** la largeur (D) la plus petite mesurée à l'extérieur entre les parties intermédiaires (12) est inférieure à l'écart (E) mesuré entre les zones de pivotement des roulettes avant (15).

4. Unité de cadre mobile selon la revendication 1, **caractérisée en ce que** l'ensemble entretoise avant (19) est configuré en forme de V ou en forme de U.

5. Unité de cadre mobile selon la revendication 1, **caractérisée en ce que** les parties d'appui fixes (27) sont fixées soit aux parties intermédiaires (12) et aux parties de support (11) soit aux parties intermédiaires (12) et aux parties initiales (10).

6. Unité de cadre de mobile selon la revendication 1, **caractérisée en ce que** les longerons (7) et les parties d'appui fixes (27) sont configurés sous forme de tubes ronds, et **en ce que** le diamètre de tube rond des longerons (7) est supérieur au diamètre de tube rond des parties d'appui (27).

7. Unité de cadre mobile selon la revendication 1, **caractérisée en ce que** toutes les courbures prévues sur les longerons (7) présentent un même rayon de courbure.

8. Unité de cadre mobile selon la revendication 1, **caractérisée en ce que** les parties de support (11) sont disposées soit de manière orientée vers le côté arrière (2) de l'unité de cadre (1) soit perpendiculairement à ce côté arrière.

9. Unité de cadre mobile selon la revendication 1, **caractérisée en ce qu'**un dispositif d'appui (20) en une ou plusieurs parties est prévu dans un espace intermédiaire (9) formé entre les deux longerons (7).

10. Unité de cadre mobile selon la revendication 9, **caractérisée en ce qu'**une autre partie d'un dispositif d'appui (20) est prévue respectivement à droite et à gauche des longerons (7).

11. Unité de cadre mobile selon la revendication 9 ou 10, **caractérisée en ce que** les parties du dispositif d'appui (20) sont montées sur les parties d'appui (12) de manière à pouvoir s'écarter vers le haut à partir d'une position d'utilisation.

12. Unité de cadre mobile selon la revendication 9, **caractérisée en ce que** le dispositif d'appui (20) est fixé à une barre transversale avant (19b) et à une autre barre transversale (19c), les barres transversales (19b, 19c) faisant partie des ensembles entretoises (19, 19a).

13. Unité de cadre mobile selon la revendication 1, **caractérisée en ce que**, lors de l'emboîtement de deux unités de cadre (1), les parties terminales (13) de l'unité de cadre (1) à insérer passent sous les parties d'appui (12) de l'unité de cadre (1) située à l'avant.

14. Unité de cadre mobile selon la revendication 1, **caractérisée en ce qu'**à l'état emboîté de deux unités de cadre (1), les parties initiales (10) et les parties de support (11) des deux unités de cadre (1) sont disposées les unes derrière les autres et les parties intermédiaires (12) des deux unités de cadre (1) sont disposées de manière décalée latéralement.
